# EUROPEAN PATENT APPLICATION

(11) **EP 1 988 061 A1**
(43) Date of publication of application: **05.11.2008**
(21) Application number: 08008178.9
(22) Date of filing: 29.04.2008
(51) Int. Cl.: C03B 37/012, G01B 11/12

(54) **Method for elongating a glass body**

(30) Priority: 01.05.2007 JP 2007121150
(71) Applicant: Sumitomo Electric Industries, Ltd., Osaka-shi, Osaka 541-0041 (JP)
(72) Inventor: Nakanishi, Tetsuya, Yokohama-shi Kanagawa (JP)
(74) Representative: HOFFMANN EITLE

(57) **Abstract**

A method of elongating a glass body is provided, in which method the axial variation in the inner refractive index structure of a glass body can be restrained. The method comprises: (1) heating and softening a glass body with a heating source that moves in the longitudinal direction while both ends of the glass body are held directly or indirectly by a first holder and a second holder, the first and second holders being distanced from each other; (2) obtaining a first outer-diameter measured value by measuring, with a first diameter monitor, the outer diameter of the core portion lying in the range where the outer diameter of the core portion is decreasing as a result of softening of the glass body; (3) determining the distancing speed of the first and second holders and/or the moving speed of the heating source according to the first outer diameter measured value so that the post-elongation outer diameter of the core portion may become a desired value; (4) and moving the first holder or the second holder and/or moving the heating source so as to elongate the glass body according to the speed thus determined.

## Description

### BACKGROUND OF THE INVENTION

### Field of the Invention

The present invention relates to a method for elongating a glass body.

### Description of the Background Art

An optical fiber produced by drawing an optical fiber preform has characteristics that depend on the refractive index profile of radial direction. As the demand for more precision with respect to the characteristics of an optical fiber has increased, so has the demand for more precision also increased with respect to the refractive index profile of the optical fiber. In order to satisfy such demand, it has been sought to develop a method of precisely manufacturing an optical fiber preform having a desired refractive index profile.

However, it has been a problem that because of insufficient precision in the elongation of an intermediate preform, the refractive index structure varies in an axial direction during the process of manufacturing an optical fiber preform. Unexamined international application WO-2004-000740 discloses a method that is intended to solve such a problem. According to the disclosed method, the elongation speed of an intermediate preform is controlled on the basis of a measured outer diameter by measuring the outer diameter of the intermediate preform during an elongation process. However, when the relationship between the inner refractive index structure of the intermediate preform and the outer diameter of the intermediate preform is not uniform in the longitudinal direction, the inner refractive index structure of the intermediate preform will vary in a longitudinal direction even if the intermediate preform is elongated in a manner in which the outer diameter of the intermediate preform becomes constant.

In addition, the quantity of vaporization (flame polishing) that is caused by heating the intermediate preform during an elongation process will be varied in the longitudinal direction depending on changes in the heating conditions of the elongation process. Thus, there have been cases where the inner refractive index structure of an intermediate preform changes in a longitudinal direction even if the finished outer diameter has been controlled precisely.

Such a problem arises not only when an intermediate preform is elongated, but also when a glass body which has a substantially columnar core portion and a cladding portion surrounding the core portion and in which the refractive index of the core portion is different from that of the cladding portion is elongated in general.

### SUMMARY OF THE INVENTION

An object of the present invention is to provide a method of elongating a glass body in which method the axial variation in the inner refractive index structure of the glass body can be restrained.

In order to achieve the object, the method of elongating a glass body, which has a substantially columnar core portion and a cladding portion surrounding the core portion and in which the refractive index of the core portion is different from that of the cladding portion, comprises: (1) heating and softening a glass body with a heating source that moves in the longitudinal direction while both ends of the glass body are held directly or indirectly by a first holder and a second holder, the first and second holders being distanced from each other; (2) obtaining a first outer-diameter measured value by measuring, with a first diameter monitor, the outer diameter of the core portion lying in the range where the outer diameter of the core portion is decreasing as a result of softening of the glass body; (3) determining the distancing speed of the first and second holders and/or the moving speed of the heating source according to the first outer diameter measured value so that the post-elongation outer diameter of the core portion may become a desired value; (4) and moving the first holder, the second holder, and/or the heating source so as to elongate the glass body according to the speed thus determined.

In the glass body elongation method of the present invention, the first diameter monitor may have an imager, and the first outer-diameter measured value may be obtained by measuring the outer diameter of the core portion on the basis of an image obtained by imaging the glass body with the imager. Also, in the glass body elongation method of the present invention, the first diameter monitor may have an imager and a display, the imager being located on one side of the glass body, and the display being provided at a position opposite to the imager, i.e., on the other side of the glass body, and being capable of displaying a background image having a bright section and a dark section; thus, the first outer-diameter measured value may be obtained by measuring the outer diameter of the core portion on the basis of an image obtained by imaging the background image through the glass body with the imager.

In the glass body elongation method of the present invention, the first measured value may be obtained by measuring, with a plurality of first diameter monitors, the outer diameters of the core portion at a plurality of points including a region where the outer diameters of the core portion are decreasing as a result of softening of the glass body; and to determine the moving speed may be to determine, on the basis of a plurality of first outer-diameter measured values, the distancing speed of the first and second holders, or the moving speed of the heating source, so that the post-elongation outer diameter of the core portion may become the desired value. Depending on the shape of the glass body, the lens effect tends to deform the image of a core portion such that the difference between a measured value and the actual value of the outer diameter of the core portion increases. It is possible to provide a correction factor beforehand according to the shape of a glass body and to control by applying the correction factor so that the core portion may have a desired outer diameter.

In the glass body elongation method of the present invention, it is preferable that the elongation of a glass body be made while the glass body is heated in a manner in which the temperature of the glass body does not exceed 1500 °C during the heating of the glass body by the heating source. The glass body elongation method of the present invention may further includes; (5) obtaining a second outer-diameter measured value by measuring, with a second diameter monitor, the outer diameter of the core portion falling in the post-elongation range of the glass body; (6) determining, on the basis of the second outer-diameter measured value, the distance between the position of outer-diameter measurement by the first diameter monitor and the position of heating by the heating source; and (7) arranging the first diameter monitor according to the distance thus determined.

### BRIEF DESCRIPTION OF THE DRAWINGS

Figure 1 is a conceptional schematic diagram showing the entire structure of an example of elongation device used in the glass body elongation method of the present invention.
Figure 2 is a conceptional schematic diagram showing a structure of the elongation device of Fig. 1 excluding the pyrometer and the diameter monitor and an enlarged view illustrating the structure at the vicinity of heated part of a glass body and the outer-diameter measuring position.
Figure 3 is a conceptional schematic diagram showing a concrete example of diameter monitor.
Figures 4A and 4B are conceptional schematic diagrams showing examples of background images displayed on a display and images obtained at an imager, respectively in the diameter monitor of Fig. 3.
Figure 5 is a conceptional schematic diagram showing an example of arrangement of diameter monitors.
Figure 6 is a conceptional schematic diagram for illustrating a method of determining the position of outer-diameter measurement.
Figure 7 is a graph showing an example of refractive index profile of a glass body to be elongated.
Figure 8 is a graph showing an example of axial variations in the outer-diameter d of the core portion and the outer-diameter D of the cladding portion with respect to a pre-elongation glass body
Figure 9 is a graph showing the relationship of the distance between a heating source and an outer-diameter measuring position to the axial fluctuation of the outer-diameter d of the post-elongation core portion.
Figure 10 is a graph showing axial fluctuations of the outer diameter d of the post-elongation core portion: the solid line and the dotted line show examples where the distances between the heating source and the outer-diameter measuring position are 5.0 mm and 4.6 mm, respectively.
Figure 11 is a graph showing examples of axial fluctuations in the outer-diameter d of the core portion and the outer-diameter D of the cladding portion with respect to the post-elongation glass body
Figure 12 is a graph showing the frequency distribution of values 2σ_{d} twice the standard deviation of the outer diameter d of the core portion with respect to a glass body elongated by the glass body elongation method of the present example.
Figure 13 is a graph showing the frequency distribution of values 2σ_{d} twice the standard deviation of the outer diameter d of the core portion with respect to a glass body elongated by the glass body elongation method of a comparative example.

### DETAILED DESCRIPTION OF THE INVENTION

The above-mentioned features and other features, aspects, and advantages of the present invention will be better understood through the following description, appended claims, and accompanying drawings. In the explanation of the drawings, an identical mark is applied to identical elements and an overlapping explanation will be omitted.

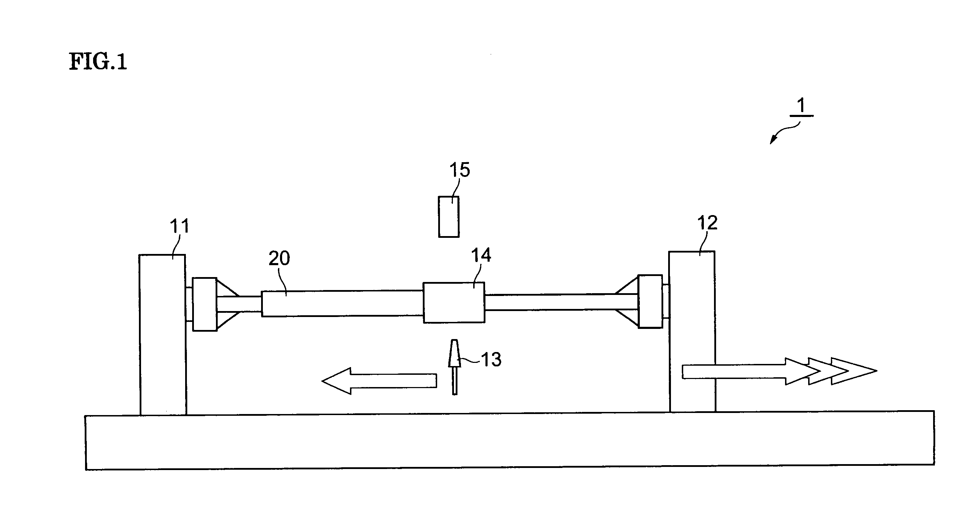

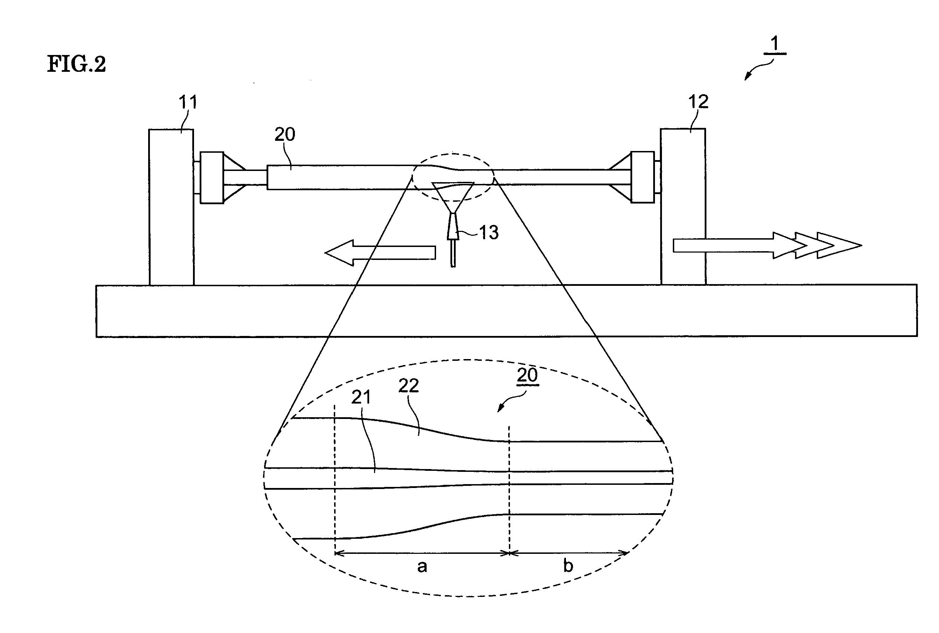

Figure 1 is a conceptional schematic diagram showing the entire structure of an example of elongation device used in the glass body elongation method of the present invention. Figure 2 is a conceptional schematic diagram showing a structure, excluding the pyrometer and the diameter monitor, of the elongation device of Fig. 1 and an enlarged view illustrating the structure at the vicinity of heated part of a glass body and the outer-diameter measuring position.

A glass body 20 to be elongated includes a substantially columnar core portion 21 and a cladding portion 22 surrounding the core portion 21, where the refractive index of the core portion 21 and that of the cladding portion 22 are mutually different. The glass body 20 is, for example, an optical fiber preform or an intermediate preform in the process of manufacturing an optical fiber preform. More specifically, the glass body contains silica glass as its main component and includes the part to be processed into the core of a single mode fiber.

One end of the glass body 20 is held by a holder 11, and the other end is held by a holder 12. The glass body 20 may be held by holders 11 and 12 through glass rods (dummy rods) which are melt-attached to both ends of the glass body and which are used for the sake of work but not as a product. One or both of the holders 11 and 12 can move along the straight line linking them, and the distance between the holder 11 and the holder 12 is variable.

A heating source 13 is used for heating to soften the glass body 20, and is preferably an oxyhydrogen burner, a resistance furnace, an induction furnace, or a plasma burner. The distance between the heating source 13 and the glass body 20 is variable, and the region of the glass body 20 to be heated by the heating source 13 is adjustable. A diameter monitor 14 measures the outer diameter of a core portion 21 in the region of the glass body 20 (the range "a" in Fig. 2) where the outer diameter of the core portion 21 is decreasing as a result of softening by heating. A pyrometer 15 measures the temperature of the heated part of the glass body 20 in a noncontact manner. The heating source 13, the diameter monitor 14, and the pyrometer 15 can respectively move in the longitudinal direction of the glass body 20.

In the following, an explanation will be given for the case where the elongation of the glass body is performed such that the holder 11 is fixed and the holder 12 moves toward the right. In such case, the heating source 13, the diameter monitor 14, and the pyrometer 15 respectively move along the glass body 20 from the right end toward the left end.

In the glass body elongation method of the present invention, the outer diameter of the core portion 21 is measured by the diameter monitor 14 with respect to the region (the range "a" in Fig. 2) of the glass body 20 where the outer diameter of the core portion 21 is decreasing as a result of softening due to heating. The distancing speed of the holders 11 and 12 or the moving speed of the heating source 13 in the longitudinal direction of the glass body 20 is determined depending on the measured outer diameter of the core portion 21 so that the outer diameter of the post-elongation core portion 21 (the range "b" of the core portion 21 in Fig. 2) may become a desired value. Thus, the glass body 20 is elongated by moving the holder 12 or the heating source 13 according to the determined speed.

As described above, the elongation of the glass body 20 is performed while the feedback control is afforded to the moving speed of the holder 12 or the heating source 13 on the basis of the outer diameter of the core portion 21, and not on the basis of the outer diameter of the cladding portion 22 of the glass body 20, so that the outer diameter of the outer diameter of the post-elongation core portion 21 may become a desired value. This makes it possible to restrain axial variations of the inner refractive index structure of the post-elongation glass body and to obtain the desired refractive index structure of the glass body 20, without being influenced by flame polishing amount (the quantity of the cladding portion that is scraped off by the oxyhydrogen flame) of the glass body 20. Accordingly, it is possible to obtain a glass body in which the variation in the outer diameter of the core portion per at least 100 mm length is equal to or less than 50 µm.

The diameter monitor 14 may be such that the image of the glass body 20 is taken with the imager from one side of the glass body 20 and the outer diameter of the core portion 21 is measured by analyzing and processing the image thus obtained. The imager is a CCD camera, for example.

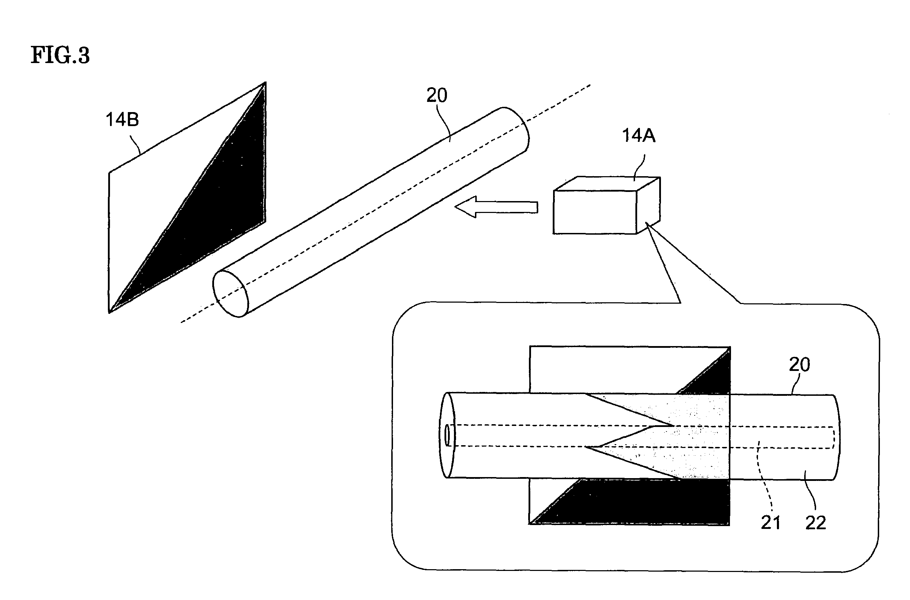

Figure 3 is a conceptional schematic diagram showing another example of the diameter monitor 14. The diameter monitor 14 includes an imager 14A provided on one side of the glass body 20 and a display 14B which is provided on the other side and which displays a background image having a bright section and a dark section. In this case, when the background image is taken with the imager 14A through the glass body 20, a deformed background image is obtained according to the inner refractive index structure of the glass body 20. By analyzing the image thus obtained, the outer diameter of the core portion 21 can be measured at high precision.

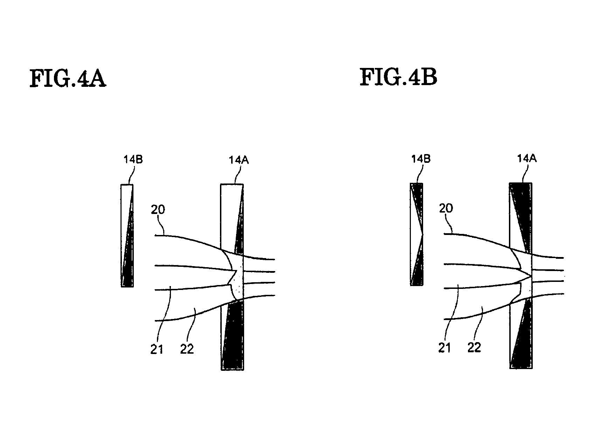

Figures 4A and 4B are conceptional schematic diagrams showing an example of background image displayed on a display 14B and an image obtained at an imager 14A, respectively, in the diameter monitor 14. The background image may have a straight boundary line between the bright section and the dark section as shown in Fig. 4A. The boundary between the bright section and the dark section may be symmetrical relative to the central axis of the glass body 20 when seen from the imagerl4A as shown in Fig. 4B. In the latter case, superior identification of the boundary between the bright section and the dark section can be achieved in the image obtained by the imager 14A and accordingly the outer diameter of the core portion 21 can be measured at higher precision.

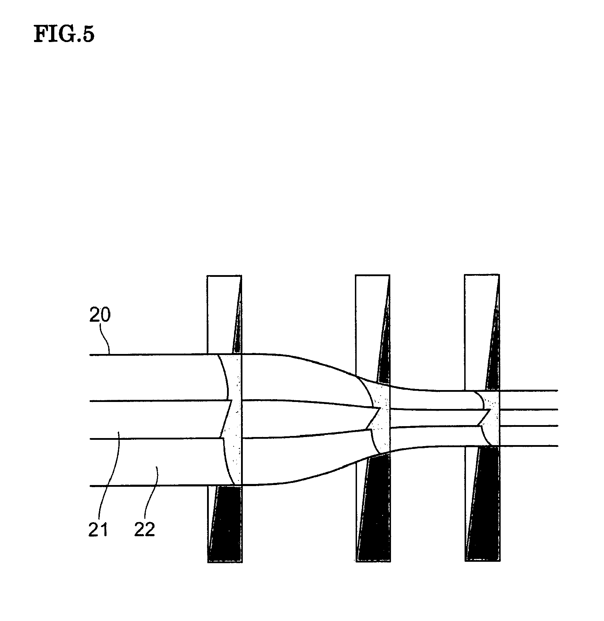

The outer diameter of the core portion may be measured at a plurality of points along the glass body with a plurality of diameter monitors. Figure 5 is a conceptional schematic diagram showing an example of the arrangement of diameter monitors 14. In this example, the outer diameter of the core portion 21 is measured in a pre-elongation region and a post-elongation region, as well as in the intermediate region where the outer diameter of the core portion 21 is decreasing due to heating of the glass body 20. Then, according to the outer diameters measured at a plurality of positions of the core portion 21, the moving speed of the holder 12 or the moving speed of the heating source 13 is determined so that the outer diameter of the post-elongation core portion 21 may become a desired value. Thus, the optimum moving speed of the holder can be calculated according to the outer diameter of the elongating core portion 21 by performing multivariate analysis one after another, accumulating pre-elongation, ongoing-elongation, and post-elongation outer diameters and holder speeds. The measurement of the outer diameter of the core portion 21 may be performed with respect to another point of the intermediate region, the pre-elongation region, or the post-elongation region, in addition to one point of the intermediate region.

Preferably, the elongation should be made while heating the glass body 20 by the heating source 13 such that the temperature of the glass body 20 does not exceed 1500 °C. If the heating temperature of the glass body 20 becomes too high, the luminousness of the glass body 20 becomes so strong that it becomes difficult to acquire the image of the glass body 20, which results in the difficulty of achieving precise measurement of the outer diameter of the core portion 21. In contrast, if the temperature of the heated part of the glass body 20 is controlled to be below 1500 °C, it is possible to acquire the image while maintaining the viscosity suitable for the elongation process.

If the control is performed on the basis of the outer diameter of the core portion 21 measured near the point where the finished diameter lies in the range of softened part of the glass body 20, the difference between the controlled value and the actual diameter of finished product decreases. Accordingly, the precision of the finished diameter can be improved and the axial fluctuation of diameter can be decreased. In this case, however, it becomes difficult to stably control the diameter of a finished product because the time lag in the control becomes larger as the point of measurement becomes farther from the heated part. Also, if the point of measurement is located nearer to the heated part, the controllability is improved, but the diameter variation tends to increase because the difference between the controlled value of diameter and the finished product diameter becomes more significant, which tends to affect the finished diameter. Thus, there is a trade-off relationship between the control responsiveness and the outer diameter stability. Therefore, the pulling speed is generally controlled by measuring the outer diameter of the core portion 21 at an optimum point empirically discovered in the range of softened part having a tapered shape that is apart from the heated part of the glass body 20.

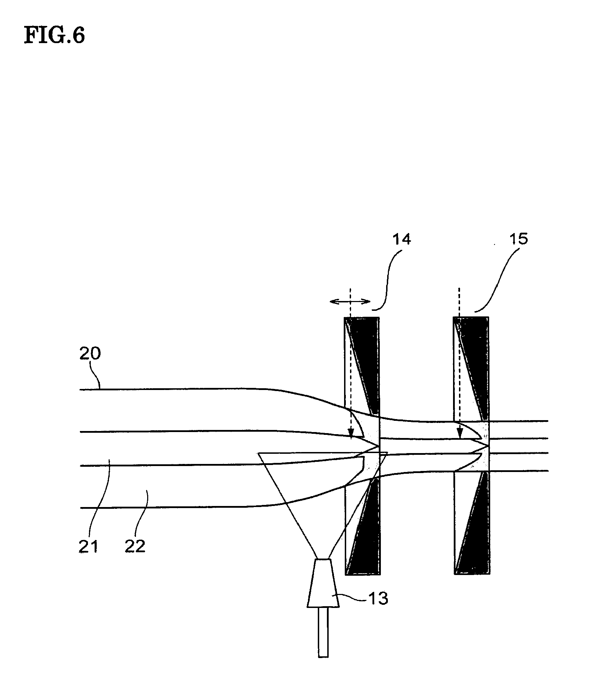

Figure 6 is a conceptional schematic diagram for illustrating a method of determining the position of outer-diameter measurement. While changing the distance between the heating source 13 and the first diameter monitor 14 during an elongation process, the outer diameter (finished diameter in this case) of the core portion 21 of the post-elongation glass body 20 is measured with a second diameter monitor 15. While monitoring the amount of variation of the finished diameter per unit length, the position of the first diameter monitor 14 where the variation becomes least is determined. Thus, the first diameter monitor 14 can be arranged at an optimum position regardless of shape in the early stage.

The following is a description of a more concrete example. An elongation device 1 was used, in which holders 11 and 12 held the dummy rods melt-bonded to both ends of a glass body 20. An oxyhydrogen burner was used as the heating source 13 and the distance from the glass body 20 to the oxyhydrogen burner was set to be 53 mm so that the control of the outer diameter of the core portion 21 may become stable. A diameter monitor 14 having a structure as shown in Fig. 3 was used, where a CCD camera was used as the imager 14A and a liquid crystal display panel was used as the display 14B, whereas the background image displayed at the display 14B was the same one as shown in Fig. 4A.

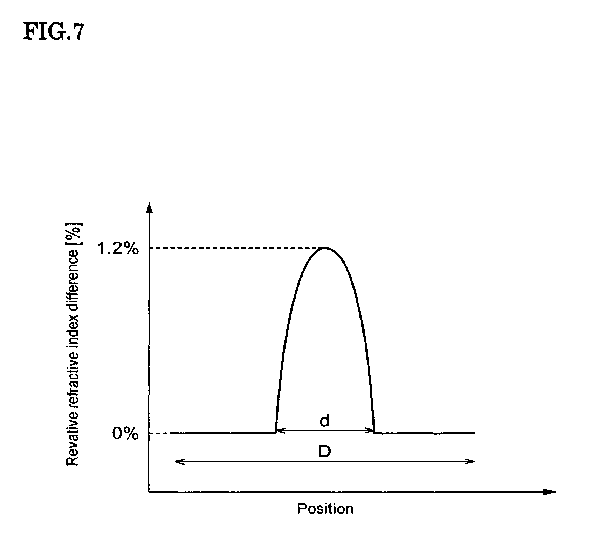

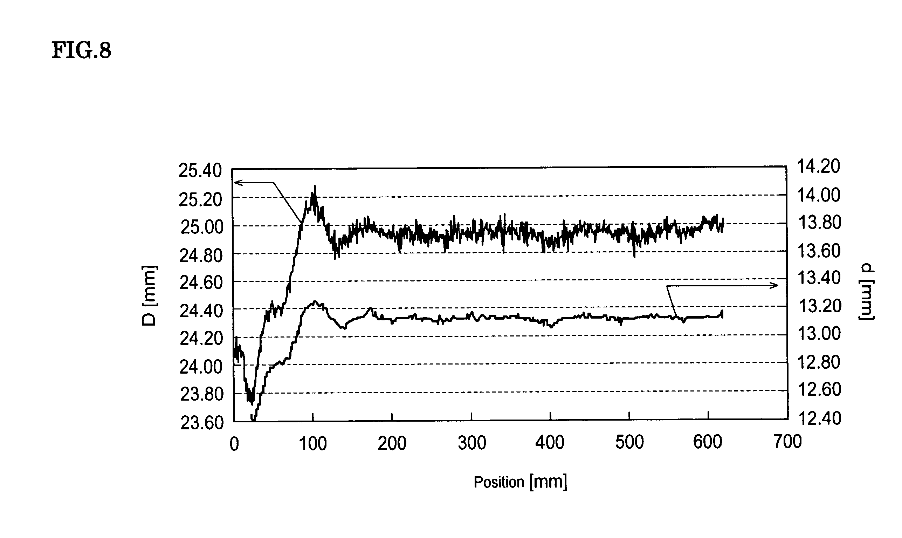

The glass body 20 to be elongated was columnar and mainly composed of silica glass, having an initial length of about 600 mm, in which the maximum relative refractive index difference of the core portion 21 to the refractive index of the cladding portion 22 was 1.2 % (Fig. 7). The axial fluctuation of the outer diameter "d" of the core portion 21 of the pre-elongation glass body 20 and that of the outer diameter D of cladding portion 22 were as shown in Fig. 8.

The glass body 20 was subjected to a preliminary elongation so that the outer diameter of the core portion 21 might become about 7.0 mmΦ by the first elongation, and was subjected to the second elongation so that a target diameter 5.0 mmΦ might be achieved for the diameter of the outer diameter of the core portion 21. In the first and second elongations, feeding back to the speed of the holder 12 was done on the basis of the measured outer diameter of the core portion 21 so that the outer diameter "d" of the core portion 21 might become the pre-determined diameter while the outer diameter "d" of core portion 21 might become constant over the longitudinal length.

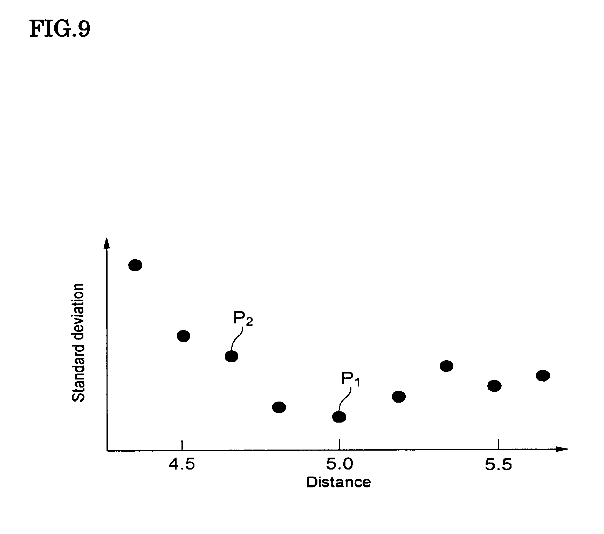

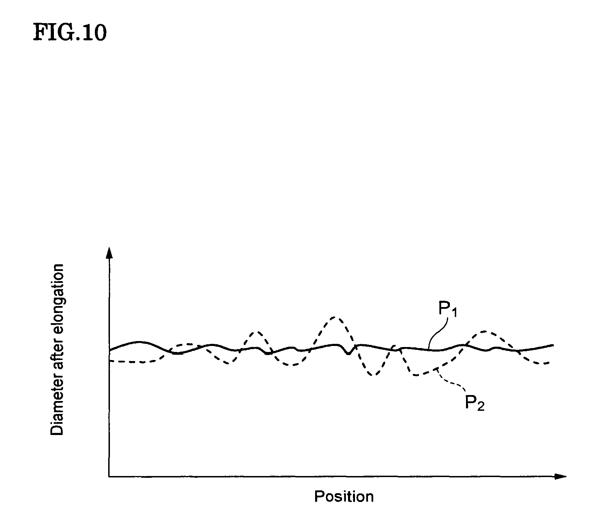

A glass body part having a 50 mm length of the first elongation was used, where optimization of distance between the heating source 13 and the outer diameter measurement position was done so as to decrease the axial fluctuation of the outer diameter d of the post-elongation core portion 21. Figure 9 is a graph showing the relationship of the distance between the heating source 13 and the outer-diameter measuring position to the axial fluctuations (standard deviation) of the outer-diameter "d" of the post-elongation core portion 21. Figure 10 is a graph showing axial fluctuations of the outer diameter "d" of the post-elongation core portion: the solid line and the dotted line show examples where the distances between the heating source and the outer-diameter measuring position are 5.0 mm and 4.6 mm, respectively In consideration of the results of Fig. 9 and Fig. 10, the distance between the heating source 13 and the outer diameter measurement position was set to 5.0 mm.

The maximum temperature of the elongating glass body 20 was 1400 °C. At this temperature, the background image displayed on the display 14B could be clearly imaged with the imager 14A.

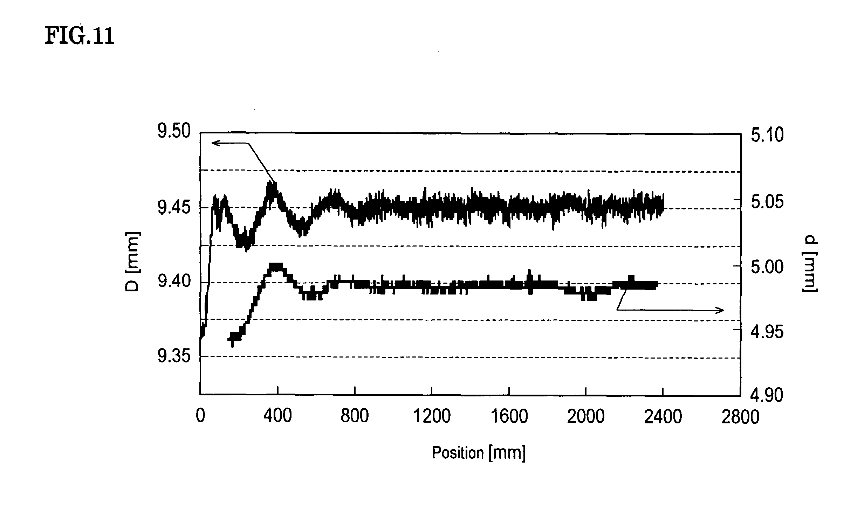

Figure 11 is a graph showing examples of axial fluctuations in the outer diameter "d" of the core portion 21 and the outer diameter D of the cladding portion 22 with respect to the post-elongation glass body 20. It can be seen that the region where the axial fluctuations of the outer diameter "d" of the core portion 21 of the post-elongation glass body 20 are within ±0.05 mm is obtained over the length of 2000 mm or more.

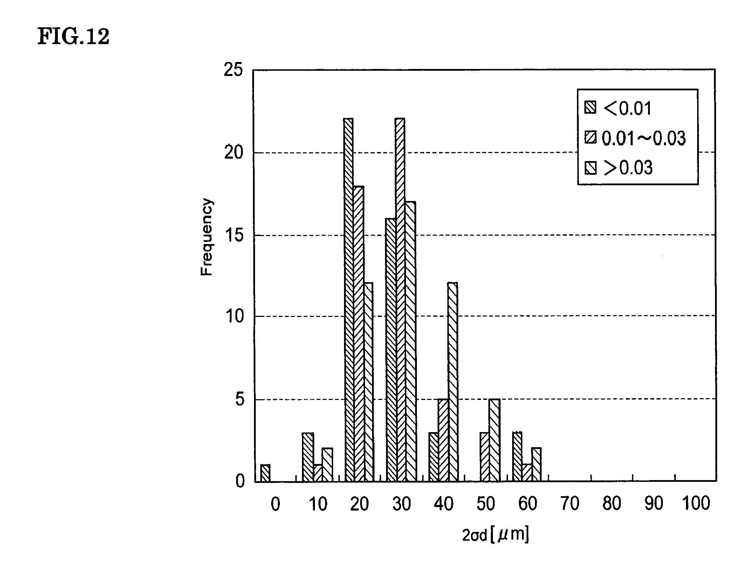

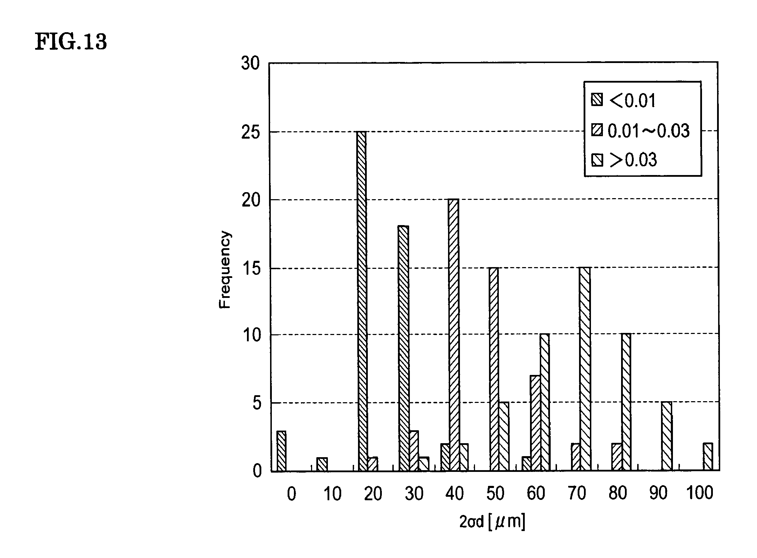

Figure 12 is a graph showing the frequency distribution of values 2σ_{d} twice the standard deviation of the outer diameter d of the core portion with respect to a glass body elongated by the glass body elongation method of the present example. Figure 13 is a graph showing the frequency distribution of values 2σ_{d} twice the standard deviation of the outer diameter d of the core portion with respect to a glass body elongated by the glass body elongation method (the method described in the publication of Unexamined international application WO 2004-000740) of a comparative example. Figures 12 and 13 each show the frequency distributions in three cases: the values 2σ_{D/d} twice the standard deviations in the longitudinal direction of the ratio D/d of the outer diameters d of the core portion and the outer diameters D of the cladding portion of the pre-elongation glass body are less than 0.01, in the range of 0.01 to 0.03, and 0.03 or more.

Thus, according to the glass body elongation method of the present invention, even in a case where the deviation 2σ_{D/d} of the ratios D/d in the longitudinal direction in an early stage is large, the deviation 2σ_{d} of the longitudinal direction of the outer diameter of the core portion is controlled to 60 mm or less in the post-elongation glass body. On the other hand, in the case of the conventional technique, the control is done so that the outer diameter D of the cladding portion may become constant. Therefore, it is understood that when the deviation 2σ_{D/d} in the longitudinal direction of the ratios D/d in an early stage increases, the outer diameter d of the post-elongation core portion could not be controlled to a constant value, and consequently the deviation 2σ_{d} of the longitudinal direction of the outer diameter of the core portion is degraded.

In this example, the elongation was implemented such that the outer diameter d of the core portion of a glass body became constant. However, it is also effective when the elongation is performed such that different target values are set in the longitudinal direction. Also, by grinding a post-elongation glass body so as to have a constant outer diameter, the glass body can easily be processed, maintaining the longitudinal distribution of the outer diameter d of the core portion formed by the elongation.

While this invention has been described in connection with what is presently considered to be the most practical and preferred embodiments, the invention is not limited to the disclosed embodiments, but on the contrary, is intended to cover various modifications and equivalent arrangements included within the spirit and scope of the appended claims.

The entire disclosure of Japanese Patent Application No. 2007-121150 filed on May 5, 2007, including the specification, claims, drawings, and summary, is incorporated herein by reference in its entirety.

## Claims

1. A method of elongating a glass body, comprising:
heating and softening the glass body with a heating source movable in the longitudinal direction, the ends of the glass body being held directly or indirectly by a first holder and a second holder, the first and second holders being distanced from each other;
obtaining a first outer-diameter measured value by measuring, with a first diameter monitor, the outer diameter of the core portion lying in the range where the outer diameter of the core portion is decreasing as a result of softening of the glass body;
determining the distancing speed of the first and second holders and/or the moving speed of the heating source according to the first outer diameter measured value so that the post-elongation outer diameter of the core portion may become a desired value; and
moving the first holder, the second holder, and/or the heating source so as to elongate the glass body according to the speed thus determined.

2. A method of elongating a glass body according to claim 1,
wherein the first diameter monitor has an imager, and the first outer-diameter measured value is obtained by measuring the outer diameter of the core portion on the basis of an image obtained by imaging the glass body with the imager.

3. A method of elongating a glass body according to claim 1 or 2,
wherein the first diameter monitor has an imager and a display capable of displaying a background image having a bright section and a dark section, the imager and the display being arranged on mutually opposing positions with the glass body being located therebetween, and
wherein the first outer diameter measured value is obtained by measuring the outer diameter of the core portion on the basis of an image obtained by imaging the background image through the glass body with the imager.

4. A method of elongating a glass body according to any one of the preceding claims,
wherein the first outer diameter measured value is obtain by measuring, with a plurality of first diameter monitors, outer diameters of the core portion at a plurality of points including a region where the outer diameter of the core portion is decreasing as a result of softening of the glass body; and
wherein to determine the moving speed is to determine, on the basis of the plurality of first outer-diameter measured values, the distancing speed of the first and second holders and/or the moving speed of the heating source so that the post-elongation outer diameter of the core portion may become a desired value.

5. A method of elongating the glass body according to any one of the preceding claims, wherein the elongation is done while the glass body is heated by the heating source in a manner in which the temperature of the glass body does not exceed 1500 °C.

6. A method of elongating a glass body according to any one of the preceding claims, wherein the method further comprises:
obtaining a second outer-diameter measured value by measuring, with a second diameter monitor, the outer diameter of the core portion falling in the post-elongation range of the glass body;
the distance between the position of outer-diameter measurement by the first diameter monitor and the position of heating by the heating source being determined on the basis of the second outer-diameter measured value; and
arranging the first diameter monitor according to the distance thus determined.
